# EUROPÄISCHE PATENTSCHRIFT

(11) **EP 4 323 662 B1**
(45) Veröffentlichungstag und Bekanntmachung des Hinweises auf die Patenterteilung: **04.06.2025**
(21) Anmeldenummer: 22721762.7
(22) Anmeldetag: 08.04.2022
(51) Int. Cl.: F16C 29/02, F16C 29/00, F16C 35/02, F16C 43/02, F16C 33/20, F16C 33/08

(54) **GLEITLAGER MIT MEHRTEILIGEM SCHLITTEN**
SLIDING BEARING WITH MULTI-PART CARRIAGE
PALIER LISSE À CHARIOT EN PLUSIEURS PARTIES

(30) Priorität: 12.04.2021 DE 202021101948 U
(43) Veröffentlichungstag der Anmeldung: 21.02.2024
(73) Patentinhaber: igus GmbH, 51147 Köln (DE)
(72) Erfinder: KÖCHING, Fabian, 50679 Köln (DE)
(74) Vertreter: Lippert Stachow Patentanwälte Rechtsanwälte
(86) Internationale Anmeldenummer: PCT/EP2022/059518
(87) Internationale Veröffentlichungsnummer: WO 2022/218878

(56) Entgegenhaltungen:
- DE-U1- 202004 016 094
- US-A- 5 346 320

## Beschreibung

Die Erfindung betrifft ein Gleitlager gemäß dem Oberbegriff von Anspruch 1 sowie eine Gleitlageranordnung mit einem solchen Gleitlager und die Verwendung eines solchen Gleitlagers.

Gattungsgemäße Gleitlager sind im Stand der Technik hinreichend bekannt und werden zur gleitenden Führung von Arbeitsvorrichtungen, insbesondere als Linearführung, verwendet. Je nach Anwendungsgebiet können solche Arbeitsvorrichtungen unterschiedlichste Eigenschaften aufweisen. Beispielsweise können solche Arbeitsvorrichtungen Elemente von Fitnessgeräten, Werkzeugmaschinen, wie beispielsweise Sägen, oder Halteeinrichtungen, beispielsweise für Displays, sein. Stets kommt es darauf an, dass das Gleitlager eine möglichst reibungsarme und verschleißfreie Führung der an ihm befestigten Arbeitsvorrichtung entlang einer Schiene ermöglicht. Ein gattungsgemäßes Gleitlager ist beispielsweise in DE 20 2004 016 094 U1 beschrieben.

Ein gattungsgemäßes Gleitlager umfasst einen Schlitten, der einen Schlittenkörper aufweist, in dem eine durch das Schlittenelement entlang einer Längsachse hindurch verlaufende Durchführung vorgesehen ist. In der Durchführung ist ein Gleitelement an dem Schlittenelement anliegend angeordnet, das eine innerhalb der Durchführung liegende Gleitöffnung zumindest abschnittsweise umschließt. Das Gleitlager ist dazu ausgebildet, einen zylindrischen Führungsabschnitt einer Schiene so in der Gleitöffnung aufzunehmen, dass sich dessen Zylinderachse entlang der Längsachse erstreckt, insbesondere mit dieser zusammenfällt, und der in der Gleitöffnung aufgenommene Führungsabschnitt zumindest abschnittsweise von dem Gleitelement umschlossen ist und somit eine gleitende Führung des Schlittens an der Schiene gewährleistet ist. Der Schlitten und somit das Gleitlager kann entsprechend entlang der Zylinderachse des Führungsabschnitts relativ zur Schiene verschoben werden, während der Schlitten ausschließlich über das Gleitelement oder eine Mehrzahl an Gleitelementen an dem Führungsabschnitt der Schiene anliegt. Bevorzugt umschließen die Öffnung und das Gleitelement die Längsachse und somit auch den in der Gleitöffnung aufgenommenen zylindrischen Führungsabschnitt in einem Winkelbereich von mindestens 200°, insbesondere mindestens 220°, insbesondere mindestens 240°, insbesondere mindestens 260°. Hierdurch ist gewährleistet, dass der Schlitten auch bei Einwirken einer externen Kraft, die senkrecht zur Längsachse zwischen der Schiene und dem Schlitten wirkt, zuverlässig an dem Führungsabschnitt der Schiene gehalten ist. Durch die entsprechende Ausgestaltung des Gleitelements ist darüber hinaus bevorzugt gewährleistet, dass auch bei jedweder externen, zwischen Schiene und Schlitten wirkenden Kraft senkrecht zur Längsrichtung der Schlitten stets ausschließlich über das Gleitelement an dem Führungsabschnitt der Schiene anliegt.

Bei einer gattungsgemäßen Gleitlageranordnung, die einen Schlitten und eine Schiene umfasst, ist der Führungsabschnitt der Schiene in der Gleitöffnung des Schlittens aufgenommen. Bevorzugt ist der Führungsabschnitt als ein sich entlang der Längsachse mit seiner Zylinderachse erstreckender Zylinder ausgebildet. Bevorzugt weist der Führungsabschnitt eine Erstreckungslänge entlang der Längsachse auf, die wesentlich größer ist als die Erstreckungslänge des Schlittens entlang der Längsachse, insbesondere mindestens das Zehnfache, insbesondere mindestens das Zwanzigfache dieser Erstreckungslänge des Schlittens beträgt. Eine gattungsgemäße Gleitlageranordnung ist somit allgemein bevorzugt als Linearführung ausgebildet und dient zur linearen, gleitenden Führung einer Arbeitsvorrichtung, die an dem Schlitten befestigt ist, während die Schiene positionsfest an einem Bauelement befestigt ist.

Bei gattungsgemäßen Gleitlagern kommen üblicherweise aus Kunststoff hergestellte Gleitelemente zum Einsatz, insbesondere aus einem Tribopolymer hergestellte Gleitelemente. Dies ermöglicht eine schmiermittelfreie Gleitführung des Gleitlagers an einer Schiene. Allerdings unterliegen solche Gleitelemente einem Verschleiß. Je nach Belastung der an dem Schlitten befestigten Arbeitsvorrichtung und je nach zurückgelegter Strecke des Schlittens entlang der Schiene kann ein Gleitelement einen solchen Verschleiß erfahren, dass ein Austausch des Gleitelements erforderlich ist. Um ein solches Gleitelement auszutauschen, ist typischerweise die Arbeitsvorrichtung von dem Schlitten zu lösen und sodann der Schlitten entlang der Längsachse von der Schiene abzuziehen, wonach das Gleitelement zugänglich wird und es aus dem Schlittenelement entnommen werden und durch ein neues Gleitelement ersetzt werden kann. Dies geht jedoch mit einem erheblichen Aufwand einher. Wegen der durch die Arbeitsvorrichtung auf den Schlitten ausgeübten Last und der eingekammerten Anordnung des Gleitelements in der Durchführung des Schlittens ist bei gattungsgemäßen Gleitlagern ein einfacher Austausch des Gleitelements und somit eine einfache Wartung des Gleitlagers nicht möglich.

Der vorliegenden Erfindung liegt die Aufgabe zugrunde, ein Gleitlager sowie eine Gleitlageranordnung sowie die Verwendung eines Gleitlagers bereitzustellen, mit dem zumindest ein Nachteil gattungsgemäßer Gleitlager zumindest teilweise behoben werden kann.

Als eine Lösung der genannten, der vorliegenden Erfindung zugrundeliegenden Aufgabe schlägt die Erfindung ein Gleitlager mit den Merkmalen gemäß Anspruch 1 vor. Das erfindungsgemäße Gleitlager umfasst, analog zu den oben erläuterten gattungsgemäßen Gleitlagern, einen Schlitten, der einen Schlittenkörper mit einer entlang einer Längsachse verlaufenden Durchführung aufweist, wobei in der Durchführung ein Gleitelement an dem Schlittenkörper anliegend angeordnet ist, das eine innerhalb der Durchführung liegende Gleitöffnung zumindest abschnittsweise umschließt, die geeignet ist, einen zylindrischen Führungsabschnitt einer entlang der Längsachse langgestreckten Schiene aufzunehmen. Das erfindungsgemäße Gleitlager kann weitere Merkmale aufweisen, die im Zusammenhang mit gattungsgemäßen Gleitlagern erläutert sind. Erfindungsgemäß weist der Schlittenkörper zwei entlang der Längsachse nebeneinander angeordnete und aneinander lösbar fixierte Schlittenelemente auf, von denen jeder einen Längsabschnitt der Durchführung ausbildet. Ein Längsabschnitt der Durchführung ist ein Abschnitt der Durchführung entlang der Längsachse, wobei die Längsachse in Längsrichtung verläuft und somit jede Ausrichtung entlang der Längsachse eine Ausrichtung entlang der Längsrichtung ist. Jedes der Schlittenelemente bildet einen jeweils anderen Längsabschnitt der Durchführung aus. Jedes der Schlittenelemente bildet einen entlang der Längsachse wirkenden Anschlag für das Gleitelement aus, wobei zumindest ein Abschnitt des Gleitelements zwischen diesen Anschlägen, die von den beiden Schlittenelementen ausgebildet sind, in seiner Position entlang der Längsachse festgelegt ist. Beispielsweise kann das Gleitelement vollständig zwischen den beiden Anschlägen angeordnet sein. Beispielsweise kann das Gleitelement einen Vorsprung aufweisen, der den genannten Abschnitt des Gleitelements ausbildet und somit entlang der Längsachse zwischen den Anschlägen angeordnet ist und somit in seinem Bewegungsspiel auf den Längserstreckungsbereich zwischen den Anschlägen festgelegt ist. Das Gleitelement ist bevorzugt in jedem der beiden von den beiden Schlittenelementen ausgebildeten Längsabschnitten der Durchführung angeordnet. Das Gleitelement kann beispielsweise zwei separate Teilgleitelemente aufweisen, wobei jedes der Teilelemente in einem jeweils anderen der beiden durch die beiden Schlittenelemente ausgebildeten Längsabschnitte der Durchführung angeordnet ist und wobei jedes der Teilgleitelemente jeweils einen Teilabschnitt des Abschnitts des Gleitelements ausbildet, der zwischen den von den beiden Schlittenelementen ausgebildeten Anschlägen in seiner Position entlang der Längsachse festgelegt ist. Besonders bevorzugt ist das Gleitelement einstückig ausgebildet, was die Herstellung und Wartung des Gleitlagers besonders vereinfacht, insbesondere einen Austausch des Gleitelements. Stets ist durch das Festlegen der Position des genannten Abschnitts des Gleitelements zwischen den Anschlägen die Position des Gleitelements insgesamt, bezogen auf die Längsachse, relativ zu dem Schlitten festgelegt.

Das erfindungsgemäße Gleitlager bringt im Vergleich zu gattungsgemäßen Gleitlagern wesentliche Vorteile mit sich. Durch die Ausbildung des Schlittenkörpers durch zwei Schlittenelemente, die entlang der Längsachse nebeneinander angeordnet und aneinander lösbar fixiert sind, so dass sie entlang der Längsachse voneinander entfernt werden können, ist eine Zugänglichkeit zu dem in der Durchführung angeordneten Gleitelement gewährleistet, wenn die Schlittenelemente voneinander entfernt sind. Darüber hinaus können durch das Vorsehen der beiden Schlittenelemente auf einfache Weise die Anschläge des Schlittens bereitgestellt sein, die im bestimmungsgemäßen Zustand des Gleitlagers, in dem die Schlittenelemente aneinander fixiert sind, eine Verschiebung des Gleitelements entlang der Längsachse relativ zum Schlitten verhindern, die jedoch nach Entfernen der Schlittenelemente keine Bewegungsbeschränkung des Gleitelements mehr mit sich bringen, so dass dann das Gleitelement austauschbar ist. Darüber hinaus ermöglicht die erfindungsgemäße Ausgestaltung des Schlittens, dass eine an dem Schlitten befestigte Arbeitsvorrichtung an einem der Schlittenelemente befestigt bleiben kann, während das andere der Schlittenelemente von der Arbeitsvorrichtung gelöst wird und entlang der Längsachse relativ zu dem einen Schlittenelement und zu der Arbeitsvorrichtung verschoben wird, insbesondere während es an dem Führungsabschnitt einer Schiene geführt ist. Durch die fortdauernde Führung des anderen Schlittenelements ist der Zusammenbau des Schlittens, d. h. ein erneutes Aneinanderfügen der Schlittenelemente, besonders einfach ermöglicht. Allgemein weist bevorzugt das Gleitelement einen sich entlang der Längsachse durchgehend erstreckenden Schlitz auf, so dass das Gleitelement radial von dem genannten zylindrischen Führungsabschnitt abgezogen werden kann, wenn es sich entlang der Längsachse zwischen den Schlittenelementen befindet. In einer Ausführungsform bilden die Schlittenelemente gleich lange Längsabschnitte der Durchführung aus. In einer anderen Ausführungsform bildet eines der Schlittenelemente mit seinem Längsabschnitt mehr als 80 % der Erstreckungslänge der Durchführung entlang der Längsachse aus, wobei bevorzugt nur in dem durch dieses Schlittenelement ausgebildeten Längsabschnitt das Gleitelement angeordnet ist und das andere der Schlittenelemente lediglich nach Art eines Deckels unter Ausbildung eines Anschlags für das Gleitelement an dem einen Schlittenelement befestigt ist.

In einer Ausführungsform sind das Gleitelement und der Schlitten dergestalt zueinander korrespondierend ausgebildet, dass das Gleitelement nur nach einem Lösen der Schlittenelemente voneinander und einem Entfernen der Schlittenelemente entlang der Längsachse und somit entlang der Längsrichtung voneinander ohne eine radiale Komprimierung aus der Durchführung entnehmbar ist. Im bestimmungsgemäßen Betriebszustand des Gleitlagers kann das Gleitelement somit allenfalls dann aus der Durchführung entnommen werden, wenn es zuvor eine radiale Komprimierung erfahren hat, durch die der genannte Abschnitt des Gleitelements radial außerhalb der von dem Schlitten ausgebildeten Anschläge bewegt worden ist. In einer Ausführungsform ist das Gleitelement bei der Anordnung eines solchen zylindrischen Führungsabschnitts in der Gleitöffnung, der an vier um jeweils 60° um die Längsachse drehwinkelversetzten Umfangsabschnitten jeweils um weniger als 0,3 mm von dem Gleitelement beabstandet ist, ausschließlich nur aus der Durchführung entnehmbar, nachdem die Schlittenelemente voneinander gelöst worden sind und entlang der Längsachse voneinander entfernt worden sind. Die beschriebenen bevorzugten Ausführungsformen ermöglichen zum einen ein zuverlässiges Festlegen des Gleitelements relativ zum Schlitten, zum anderen weiterhin eine einfache Entnehmbarkeit des Gleitelements nach erfolgtem Lösen und Entfernen der Schlittenelemente voneinander. In einer Ausführungsform sind die Schlittenelemente und das Gleitelement dergestalt zueinander korrespondierend ausgebildet, dass bei einer Anordnung eines solchen zylindrischen Führungsabschnitts der Schiene in der Gleitöffnung, der einen solchen Durchmesser aufweist, dass er an zwei radial gegenüberliegenden Enden jeweils an dem Gleitelement anliegt, nach dem Lösen der Schlittenelemente voneinander die Schlittenelemente jeweils durch den von ihnen ausgebildeten Längsabschnitt der Durchführung an dem Führungsabschnitt der Schiene geführt entlang der Längsachse voneinander entfernbar sind, während das Gleitelement an einem der beiden Schlittenelemente angeordnet verbleibt, bis das andere der Schlittenelemente entlang der Längsachse von dem Gleitelement beabstandet ist, und anschließend das Gleitelement entlang der Längsachse aus dem einen Schlittenelement entfernbar ist. Die Schlittenelemente können somit bevorzugt über die von ihnen jeweils ausgebildeten Längsabschnitte der Durchführung jeweils an dem zylindrischen Führungsabschnitt geführt entlang der Längsachse voneinander weg bewegt werden, während das Gleitelement an einem der Schlittenelemente angeordnet verbleibt. Sobald die Schlittenelemente ausreichend voneinander beabstandet sind, so dass das nur noch an einem der Schlittenelemente angeordnete Gleitelement radial zugänglich ist, kann das Gleitelement von diesem Schlittenelement entnommen werden, indem es entlang der Längsachse aus dem von diesem Schlittenelement ausgebildeten Längsabschnitt der Durchführung herausgezogen wird. Allgemein bevorzugt umschließen die Schlittenelemente die jeweils in den von ihnen ausgebildeten Längsabschnitt der Durchführung die Längsachse in einem Winkelbereich von mindestens 200°, insbesondere mindestens 220°, insbesondere mindestens 240°, insbesondere mindestens 260°. Allgemein bevorzugt umschließt das Gleitelement, insbesondere in jedem der von den beiden Schlittenelementen ausgebildeten Längsabschnitt der Durchführung, die Längsachse in einem Winkelbereich von mindestens 200°, insbesondere mindestens 220°, insbesondere mindestens 240°, insbesondere mindestens 260°. Bevorzugt ist das Umschließen ein ununterbrochenes Umschließen über den genannten Winkelbereich hinweg. Bevorzugt ist das genannte Umschließen über mindestens 50%, insbesondere mindestens 80%, insbesondere mindestens 90% der Gesamtlänge der Durchführung entlang der Längsachse und/oder der Länge des Gleitelements entlang der Längsachse gegeben. Durch das Umschließen ist eine besonders zuverlässige gleitende Fixierung und Lagerung des Gleitlagers an einem zylindrischen Führungsabschnitt gewährleistet.

In einer Ausführungsform weist das Gleitelement ein Mantelteil auf, das nach Art eines Hohlzylinders ausgebildet ist, insbesondere nach Art eines durch einen entlang der Längsachse durchlaufenden Schlitz unterbrochenen Hohlzylinders ausgebildet ist. Dieser Schlitz ermöglicht eine radiale Zugänglichkeit der Gleitöffnung. Durch das Vorsehen eines Schlitzes kann das Gleitelement bevorzugt radial auf einen zylindrischen Führungsabschnitt aufgeklipst werden. Das Mantelteil bildet mit seiner radialen Innenseite die Gleitöffnung aus. Der lichte Querschnitt des Hohlzylinders entspricht somit dem Querschnitt der Gleitöffnung. Besonders bevorzugt ist an einer radialen Außenseite des Mantelteils eine um die Längsachse umlaufende Vorsprungsanordnung ausgebildet, die entlang der Längsachse zwischen den von den beiden Schlittenelementen ausgebildeten Anschlägen angeordnet ist. Die Vorsprungsanordnung kann beispielsweise durch einen über einen festgelegten Winkelbereich, insbesondere wie oben erläutert bevorzugt großen Winkelbereich, geschlossen um die Längsachse umlaufend ausgebildet sein oder in Umlaufrichtung voneinander beabstandete Vorsprungsabschnitte aufweisen, die bevorzugt über einen entsprechend großen Winkelbereich (wie oben erläutert bevorzugt mindestens 200°, bevorzugt mindestens 240°, bevorzugt mindestens 260°) verteilt sind. Die Vorsprungsanordnung ist zumindest teilweise entlang der Längsachse zwischen den von den beiden Schlittenelementen ausgebildeten Anschlägen angeordnet. Beispielsweise kann die Vorsprungsanordnung einige Vorsprungsabschnitte aufweisen, die zwischen den Anschlägen angeordnet sind, sowie zumindest einen weiteren Vorsprungsabschnitt, der außerhalb der Anschläge angeordnet ist. Dieser weitere Vorsprungsabschnitt kann beispielsweise eine andere Funktion erfüllen als die anderen Vorsprungsabschnitte, beispielsweise eine rotatorische Sperrung bewirken und somit als Verdrehsicherungsabschnitt ausgebildet sein. Allgemein weist bevorzugt die Vorsprungsanordnung mehrere um die Längsachse verteilt angeordnete Vorsprungsabschnitte auf, von denen zumindest einer als Verdrehsicherungsabschnitt ausgebildet ist und zwischen zwei senkrecht zur Längsrichtung wirkenden, in einer Drehrichtung um die Längsachse voneinander beabstandeten weiteren Anschlägen des Schlittens angeordnet ist. Durch die Anordnung des Verdrehsicherungsabschnitts zwischen den weiteren Anschlägen des Schlittens ist somit eine Drehposition des Gleitelements zum Schlitten bezogen auf eine Drehung um die Längsachse festgelegt. Besonders bevorzugt bilden die Schlittenelemente jeden der weiteren Anschläge gemeinsam aus, so dass jedes der Schlittenelemente jeweils einen Teil eines jeden der weiteren Anschläge ausbildet. Besonders bevorzugt sind sämtliche Vorsprungsabschnitte der Vorsprungsanordnung entlang der Längsachse zwischen den genannten Anschlägen des Schlittens angeordnet.

Besonders bevorzugt bilden die Schlittenelemente an ihren entlang der Längsachse zueinander weisenden Enden gemeinsam eine um die Längsachse umlaufende, die Anschläge der beiden Schlittenelemente ausbildende Nut aus. Bevorzugt ist die Nut um die Längsachse ununterbrochen umlaufend, bevorzugt über einen wie oben angegebenen vorteilhaften großen Winkelbereich. Der genannte Abschnitt des Gleitelements ist somit innerhalb der Nut angeordnet. Bevorzugt ist der Abschnitt durch die Vorsprungsanordnung ausgebildet. Entsprechend ist bevorzugt die Vorsprungsanordnung zumindest teilweise in der Nut angeordnet, nämlich zumindest mit dem Teil, mit dem sie den genannten Abschnitt des Gleitelements ausbildet. Besonders bevorzugt ist auch der Verdrehsicherungsabschnitt, bezogen auf eine Richtung entlang der Längsachse, in der Nut angeordnet. Bevorzugt weist der Schlitten eine Aussparung auf, die in die Durchführung mündet, wobei der Verdrehsicherungsabschnitt des Gleitelements in der Aussparung angeordnet ist. Die Aussparung mündet in radialer Richtung in die Durchführung, so dass sich der Verdrehsicherungsabschnitt ausgehend von der Durchführung radial in die Aussparung hinein erstreckt. Bevorzugt ist die Aussparung in eine Richtung entlang der Längsachse innerhalb der genannten Nut angeordnet, so dass die Aussparung in die Nut mündet. Alternativ oder zusätzlich bildet die Aussparung bevorzugt eine durchgehende Verbindung von einer Außenseite des Schlittens zu der Durchführung aus.

Allgemein bevorzugt sind die Schlittenelemente einstückig ausgebildet, besonders bevorzugt aus einem Metall oder einer Metalllegierung einstückig hergestellt. Bevorzugt sind die Schlittenelemente mittels Druckguss hergestellt. Allgemein bevorzugt ist das Gleitelement aus einem tribologischen Polymer hergestellt, insbesondere einstückig aus dem tribologischen Polymer hergestellt, insbesondere mittels Spritzguss. Ein solches tribologisches Polymer ist ein mit Bezug auf Verschleißminderung und Reibminderung optimiertes Polymer. Üblicherweise weist ein solches tribologisches Polymer ein Basispolymer auf, beispielsweise die Thermoplaste Polyethen, Polypropylen, Polyacetal, Polycarbonat, Polyamid, Polyvinylchlorid,

Polytetrafluorethen sowie bei den Duroplasten Phenolharze. Diesem Basispolymer sind feinteilige Feststoffschmiermittel, beispielsweise Molybdändisulfid oder Graphit, und/oder Füllstoffe, beispielsweise Kunststoff- oder Textilfasern oder -partikel, beigefügt. Allgemein bevorzugt weist das Gleitelement an der Innenseite seines Mantelteils entlang der Längsachse verlaufende Rinnen auf. Diese Rinnen können zum einen einer höheren Reibung wegen Verschmutzung zwischen Gleitelement und Führungsabschnitt einer Schiene vorbeugen, zum anderen kann durch die Rinnen das Gleitelement bevorzugte radial elastische Eigenschaften aufweisen und bevorzugt eine Anlagefläche des Gleitelements an dem Führungsabschnitt reduziert sein.

In einer Ausführungsform weist das Gleitlager zumindest einen Stift auf, der sich entlang der Längsachse erstreckt. Der Stift ist an einer Seite des einen der Schlittenelemente fixiert, die zum anderen der Schlittenelemente weist und somit entlang der Längsachse weist. Der Stift ist in einer lochartigen, insbesondere sacklochartigen, Vertiefung angeordnet, die an der zum einen Schlittenelement weisenden Seite des anderen Elements vorgesehen ist. Entsprechend greift der Stift in diese Vertiefung ein zum Festlegen einer Position der Schlittenelemente zueinander senkrecht zur Längsachse. Beispielsweise kann eine Drehposition der Schlittenelemente zueinander bezogen auf eine Drehung um die Längsachse eindeutig festgelegt sein, wenn sich ein zylindrischer Führungsabschnitt in der Durchführung des Schlittens befindet. Bevorzugt weist das Gleitlager zwei senkrecht zur Längsachse voneinander beabstandete Stifte auf, wobei durch das Vorsehen von zwei Stiften die Drehposition eindeutig festgelegt sein kann, wobei diese Stifte wie zu dem einen Stift erläutert an der Seite von einem der Schlittenelemente angeordnet sind und jeweils in eine Vertiefung, die an dem anderen der Schlittenelemente angeordnet ist, eingreifen. Bevorzugt ist der Stift an dem einen Schlittenelement fixiert, indem an der genannten Seite dieses einen Schlittenelements eine lochartige, insbesondere sacklochartige Vertiefung vorgesehen ist, in die der Stift eingesteckt ist. Die Fixierung des Stifts bezieht sich auf eine Fixierung senkrecht zur Längsachse. Bevorzugt weist der Stift im Wesentlichen denselben Querschnitt auf wie die lochartige Vertiefung, so dass der Stift möglichst spielfrei in der Vertiefung gehalten ist. Durch das Vorsehen des einen Stifts bzw. mehrerer Stifte kann ein bestimmungsgemäßes Aneinanderfügen der Schlittenelemente zur Realisierung des Schlittens besonders vereinfacht sein und die Robustheit des Schlittens besonders erhöht sein.

In einer Ausführungsform weist das Gleitlager eine sich entlang der Längsachse erstreckende Schraube auf, die mit ihrem Schraubkopf entlang der Längsachse gegen eine Außenseite von einem der Schlittenelemente presst und die sich mit ihrem Gewindebolzen durch dieses eine Schlittenelement hindurch erstreckt und in ein Gewindeloch, das in dem anderen der Schlittenelemente vorgesehen ist, geschraubt ist. Hierdurch kann eine zuverlässige lösbare Fixierung der Schlittenelemente zueinander gewährleistet sein.

In einer Ausführungsform umfasst der Schlitten eine Befestigungseinrichtung zum Befestigen einer Arbeitsvorrichtung an dem Schlitten. Die Befestigungseinrichtung weist eine in einer Ebene liegende Auflagefläche für die Arbeitsvorrichtung auf, die zwei Teilflächen aufweist, wobei jedes der Schlittenelemente jeweils eine der Teilflächen ausbildet. Alternativ oder zusätzlich kann der Schlitten zumindest einen senkrecht zur Längsachse verlaufenden Kanal, insbesondere zumindest zwei senkrecht zur Längsachse verlaufende Kanäle, aufweisen zur Aufnahme eines Befestigungsmittels zur Befestigung der Arbeitsvorrichtung an dem Schlitten. Beispielsweise kann das Befestigungsmittel eine Schraube sein, die durch den Kanal hindurch in ein korrespondierendes Gewinde der Arbeitsvorrichtung geschraubt ist und die mit ihrem Schraubkopf gegen den Schlitten presst, so dass die Arbeitsvorrichtung über das Befestigungsmittel an dem Schlitten fixiert ist. Indem jedes der Schlittenelemente eine Teilfläche der Auflagefläche aufweist und/oder jedes der Schlittenelemente einen der beiden Kanäle aufweist, kann eine Befestigung der Arbeitsvorrichtung an beiden Schlittenelementen erfolgen. Entsprechend kann eines der Schlittenelemente von der Arbeitsvorrichtung gelöst werden und entlang der Längsachse von der Arbeitsvorrichtung und dem an ihr weiterhin befestigten Schlittenelement entfernt werden zum Austausch des Gleitelements. Besonders bevorzugt verlaufen die Kanäle parallel zueinander. Besonders bevorzugt ist von jedem der Schlittenelemente jeweils zumindest einer der Kanäle ausgebildet. Besonders bevorzugt tritt jeweils zumindest einer der Kanäle durch jeweils eine der Teilflächen hindurch, so dass durch jede der Teilflächen jeweils zumindest einer der Kanäle hindurchtritt. Bei einem Hindurchtreten des Kanals durch die Teilfläche mündet der Kanal in die Teilfläche. Entsprechend kann die Befestigung der Arbeitsvorrichtung innerhalb der Teilfläche durch den genannten Kanal erfolgen.

Die Erfindung betrifft ferner eine Gleitlageranordnung umfassend ein erfindungsgemäßes Gleitlager sowie eine Schiene, wobei die Schiene mit ihrem Führungsabschnitt in der Gleitöffnung angeordnet ist und an dem Gleitelement anliegt. Bevorzugt liegt der Führungsabschnitt an zwei seiner radial, d. h. senkrecht zur Längsachse, ausgebildeten Enden an dem Gleitelement an, insbesondere an vier radialen Enden, die jeweils um einen Drehwinkel von 60° um die Längsachse voneinander versetzt sind. Bevorzugt ist der Führungsabschnitt entlang der Längsachse um ein Vielfaches länger als der Schlitten.

Die Erfindung betrifft ferner die Verwendung einer erfindungsgemäßen Gleitlageranordnung. Bei der erfindungsgemäßen Verwendung werden zum Austausch des Gleitelements die Schlittenelemente voneinander gelöst und entlang der Längsachse voneinander entfernt, während sie beide ununterbrochen an dem Führungsabschnitt der Schiene geführt sind und der von dem jeweiligen Schlittenelement ausgebildete Längsabschnitt der Durchführung diesen Führungsabschnitt umgreift, insbesondere über den obengenannten vorteilhaften Winkelbereich hinweg. Bei der erfindungsgemäßen Verwendung wird das Gleitelement entlang der Längsachse zwischen den voneinander entfernten und an dem Führungsabschnitt der Schiene geführten Schlittenelementen vollständig aus der Durchführung des Schlittens entnommen und durch ein neues Gleitelement ersetzt. Das Entnehmen aus der Durchführung kann beispielsweise erfolgen, indem das Gleitelement in dem von einem der Schlittenelemente ausgebildeten Längsabschnitt der Durchführung verbleibt, während das andere der Schlittenelemente von dem einem Schlittenelement entfernt wird, wonach das Gleitelement auch von diesem von dem einen der Schlittenelemente ausgebildeten Längsabschnitt der Durchführung entnommen wird. Das Gleitelement wird durch ein neues Gleitelement ersetzt, indem das neue Gleitelement nach dem Entnehmen des Gleitelements zwischen, bezogen auf eine Richtung entlang der Längsachse, den Schlittenelementen in die Durchführung des Schlittens eingeführt wird, wonach die Schlittenelemente miteinander verbunden und aneinander fixiert werden unter Festlegung der Position des neuen Gleitelements relativ zum Schlitten. Das neue Gleitelement wird somit mit Bezug auf eine Richtung entlang der Längsachse zwischen die Schlittenelemente geführt, bis es fluchtend zu den von den Schlittenelementen ausgebildeten Längsabschnitten der Durchführung angeordnet ist, wonach die Schlittenelemente entlang der Längsachse aufeinander zubewegt werden und das Gleitelement in die genannten Längsabschnitte der Durchführung aufgenommen wird, so dass das Gleitelement entlang der Längsachse in die Durchführung des Schlittens eingeführt wird.

Merkmale, die mit Bezug auf das erfindungsgemäße Gleitlager bzw. die erfindungsgemäße Verwendung beschrieben sind, können analog bei der erfindungsgemäßen Verwendung bzw. dem erfindungsgemäßen Gleitlager vorgesehen sein. Ferner sei darauf hingewiesen, dass die Bezeichnung "das eine Schlittenelement" bzw. "das andere Schlittenelement" stets nur im unmittelbaren Kontext der Bezeichnung zur Unterscheidung der beiden Schlittenelemente voneinander dient. Die im jeweiligen Kontext mit Bezug auf "das eine" bzw. "das andere" Schlittenelement beschriebenen Merkmale können wahlweise bei irgendeinem der beiden Schlittenelemente vorgesehen sein, so dass die Bezeichnungen "das eine" und "das andere" vertauschbar sind.

Die Erfindung wird nachfolgend unter Bezugnahme auf zwei Figuren anhand eines Ausführungsbeispiels näher erläutert.

Es zeigen:
- Figur 1:: in einer schematischen Prinzipdarstellung eine Explosionszeichnung eines erfindungsgemäßen Gleitlagers;
- Figur 2:: in verschiedenen schematischen Prinzipdarstellungen verschiedene Ansichten auf die Ausführungsform eines erfindungsgemäßen Gleitlagers gemäß Figur 1.

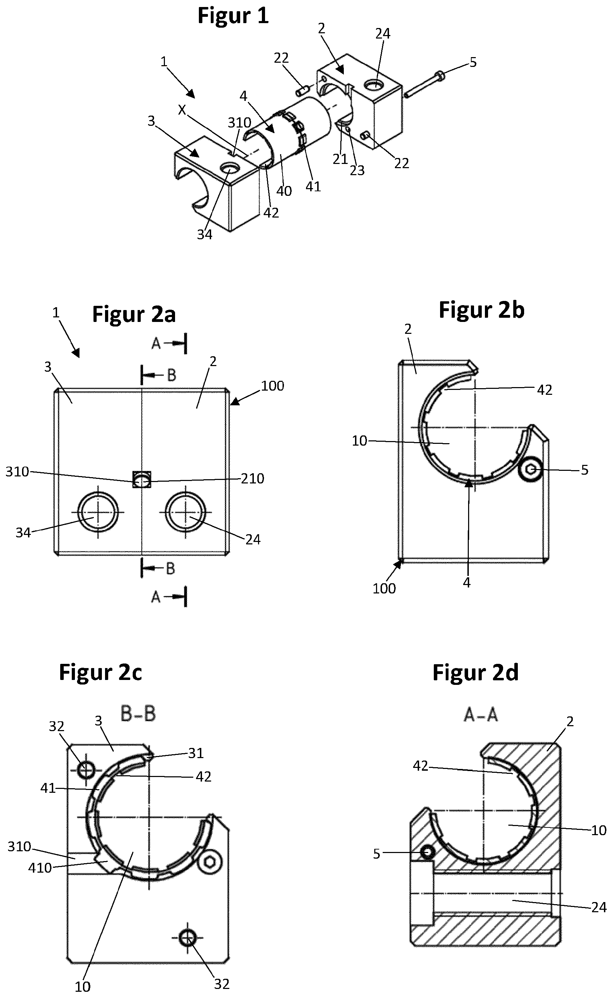

In Figur 1 ist in einer schematischen Prinzipdarstellung eine Explosionszeichnung einer Ausführungsform eines erfindungsgemäßen Gleitlagers 1 gezeigt. Das Gleitlager 1 umfasst einen Schlitten, der durch ein erstes Schlittenelement 2 und ein zweites Schlittenelement 3 gebildet ist. Das Gleitlager 1 weist ferner ein Gleitelement 4 auf. Das Gleitelement 4 weist ein Mantelteil 40 auf, das nach Art eines durch einen entlang der Längsachse X durchlaufenden Schlitz unterbrochenen Hohlzylinders ausgebildet ist. An der radialen Außenseite des Mantelteils 40 ist eine Vorsprungsanordnung 41 vorgesehen. Die Vorsprungsanordnung 41 ist in der Längsmitte des Mantelteils 40 vorgesehen, was erfindungsgemäß allgemein vorteilhaft ist. In Figur 1 ist eine Explosionszeichnung gezeigt und somit nicht das Gleitlager 1 in seinem bestimmungsgemäßen Zustand. Aus Figur 1 ist jedoch ersichtlich, dass die Schlittenelemente 2, 3 jeweils einen Längsabschnitt einer Durchführung des Schlittens ausbilden, in den jeweils ein Längsabschnitt des Gleitelements 4 entlang der Längsachse X eingeschoben werden kann, wobei das Gleitelement 4 an seiner radialen Innenseite eine Gleitöffnung zur Aufnahme eines zylindrischen Führungsabschnitts einer Schiene ausbildet. Sowohl die Schlittenelemente 2, 3 als auch das Gleitelement 4 umschließen die Längsachse X über einen Winkelbereich, bezogen auf einen Drehwinkel um die Längsachse X, von über 240°. Ferner ist ersichtlich, dass die Schlittenelemente 2, 3 jeweils einen Abschnitt einer Nut ausbilden, in der im bestimmungsgemäßen, zusammengebauten Zustand des Schlittens die Vorsprungsanordnung 41 aufgenommen ist, wodurch die Längsposition des Mantelteils 4 relativ zu den Schlittenelementen 2, 3 eindeutig festgelegt ist. Die Schlittenelemente 2, 3 weisen ferner jeweils einen Kanal 24, 34 auf, der sich senkrecht zur Längsachse X erstreckt und durch eine von dem jeweiligen Schlittenelement 2, 3 ausgebildete Teilfläche hindurchtritt. Die von den Schlittenelementen 2, 3 ausgebildeten Teilflächen sind jeweils eben und bilden im zusammengebauten Zustand des Schlittens, wie aus Figur 2a ersichtlich, gemeinsam eine ebene Auflagefläche für eine Arbeitsvorrichtung aus. Aus Figur 1 ist ferner ersichtlich, dass zur Festlegung der Position der Schlittenelemente 2, 3 senkrecht zur Längsachse X zueinander Stifte 22 vorgesehen sind, die in sacklochartige Vertiefungen, die an den zueinander weisenden Längsenden der beiden Schlittenelemente 2, 3 vorgesehen sind, im zusammengebauten Zustand des Schlittens eingesteckt sind. In Figur 1 ist lediglich eine der sacklochartigen Vertiefungen des ersten Schlittenelements 2 gezeigt. Ferner umfasst das Gleitlager 1 eine Schraube 5, die sich durch ein in dem ersten Schlittenelement 2 vorgesehenes Loch 23 hindurch erstreckt und bestimmungsgemäß in das zweite Schlittenelement 3 geschraubt wird, so dass ihr Schraubkopf gegen das erste Schlittenelement 2 presst und die beiden Schlittenelemente 2, 3 bezogen auf ihre Relativpositionen in der Längsachse X zueinander festlegt.

In Figur 2 umfassend die Figuren 2a, 2b, 2c und 2d sind verschiedene Ansichten des Gleitlagers 1 dargestellt. Das Gleitlager 1 ist in seinem bestimmungsgemäßen Zustand dargestellt, in dem die Schlittenelemente 2, 3 unter Ausbildung des Schlittens 100 positionsfest aneinander fixiert sind. Figur 2a zeigt eine Ansicht von oben auf die zur Auflage einer Arbeitsvorrichtung vorgesehene ebene Auflagefläche, die gemeinsam von den Schlittenelementen 2, 3 ausgebildet ist und durch die die in den Schlittenelementen 2, 3 vorgesehenen Kanäle 24, 34 hindurch treten. In Figur 2a ist ferner die von den beiden Schlittenelementen 2, 3 durch jeweils einen Aussparungsabschnitt 210, 310 ausgebildete Aussparung zu sehen, die in die von dem Schlitten 100 ausgebildete Durchführung mündet und die im Zusammenhang mit Figur 2c näher erläutert ist. In Figur 2b ist eine Ansicht entlang der Längsachse X auf das erste Schlittenelement 2 des Gleitlagers 1 gemäß Figur 2a dargestellt. Aus Figur 2b ist zu erkennen, das die Schraube 5 mit ihrem Schraubkopf gegen das erste Schlittenelement 2 presst zur Fixierung seiner Längsposition relativ zum zweiten Schlittenelement 3, und dass in der von dem Schlitten 100 ausgebildeten Durchführung das Gleitelement 4 angeordnet ist, das mit seiner radialen Innenseite eine innerhalb der Durchführung liegende Gleitöffnung 10 umschließt, vorliegend über einen Winkelbereich um die Längsachse X von mehr als 260°. Ferner ist aus Figur 2b zu erkennen, dass das Gleitelement 4 Rillen 42 aufweist, die jeweils zwischen zwei Abschnitten des Gleitelements 4 vorgesehen sind, die zur Anlage an einem zylindrischen Führungsabschnitt einer Schiene vorgesehen sind.

In den Figuren 2c und 2d sind die in Figur 2a eingezeichneten Ansichten B-B und A-A gezeigt. Aus Figur 2c ist ersichtlich, dass die Vorsprungsanordnung 41 des Mantelteils 40 senkrecht zur Längsrichtung mit dem zweiten Schlittenelement 3 überlappt, so dass das zweite Schlittenelement 3 einen Anschlag 31 ausbildet, der gemeinsam mit dem in Figur 1 gezeigten Anschlag 21 des ersten Schlittenelements 2 die Längsposition der Vorsprungsanordnung 41 und somit auch des Gleitelements 4 insgesamt relativ zu dem Schlitten 100 festlegt. Aus Figur 2c ist ferner ersichtlich, dass die Vorsprungsanordnung 41 einen als Verdrehsicherungsabschnitt 410 ausgebildeten Vorsprungsabschnitt umfasst, der in die von dem zweiten Schlittenelement 3 ausgebildete Teilaussparung 310 und auch, wenn auch in Figur 2c nicht dargestellt, in die vom ersten Schlittenelement 2 ausgebildete Teilaussparung 210 mündet. Die durch die Teilaussparungen 210, 310 gebildete Aussparung bildet somit weitere Anschläge des Schlittens 100 aus, zwischen denen der Drehversicherungsabschnitt 410 angeordnet ist. Diese weiteren Anschläge wirken mit Bezug auf eine Richtung senkrecht zur Längsrichtung. Durch die Anordnung des Verdrehsicherungsabschnitts 410 in der genannten Aussparung ist eine Drehposition des Gleitelements, bezogen auf eine Drehung um die Längsachse, relativ zum Schlitten 100 festgelegt. In Figur 2c sind ferner die sacklochartigen Vertiefungen 32 an der zum ersten Schlittenelement 2 weisenden Seite des zweiten Schlittenelements 3 zu erkennen, in die die in Figur 1 gezeigten Stifte 22 eingreifen zur Festlegung einer relativen Drehposition der Schlittenelemente 2, 3, bezogen auf eine Drehung um die Längsachse X, zueinander. In Figur 2b ist ein Schnitt durch den Kanal 24 des ersten Schlittenelements 2 gezeigt. In Figur 2d ist der Gewindebolzen der Schraube 5 zu erkennen, der sich durch das erste Schlittenelement 2 hindurch erstreckt. Ferner ist in Figur 1 die von dem Gleitelement 4 ausgebildete Gleitöffnung 10 zu erkennen und die Rillen 42, die an der radialen Innenseite des Gleitelements 4 vorgesehen sind.

### Bezugszeichenliste

- 1: Gleitlager
- 2: erstes Schlittenelement
- 3: zweites Schlittenelement
- 4: Gleitelement
- 5: Schraube
- 10: Gleitöffnung
- 21: Anschlag
- 22: Stift
- 23: Loch
- 24: Kanal
- 31: Anschlag
- 32: sacklochartige Vertiefung
- 34: Kanal
- 40: Mantelteil
- 41: Vorsprungsanordnung
- 42: Rille
- 100: Schlitten
- 210: Teilaussparung
- 310: Teilaussparung
- 410: Verdrehsicherungsabschnitt
- X: Längsachse

## Patentansprüche

1. Gleitlager (1) umfassend einen Schlitten (100), der einen Schlittenkörper mit einer entlang einer Längsachse (X) verlaufenden Durchführung aufweist, wobei in der Durchführung ein Gleitelement (4) an dem Schlittenkörper anliegend angeordnet ist, das eine innerhalb der Durchführung liegende Gleitöffnung (10) zumindest abschnittsweise umschließt, die zur Aufnahme eines zylindrischen Führungsabschnitts einer entlang der Längsachse (X) langgestreckten Schiene ausgebildet ist, **dadurch gekennzeichnet, dass**
der Schlittenkörper zwei entlang der Längsachse (X) nebeneinander angeordnete und aneinander lösbar fixierte Schlittenelemente (2, 3) umfasst, von denen jeder einen Längsabschnitt der Durchführung ausbildet, wobei jedes der Schlittenelemente (2, 3) einen entlang der Längsachse wirkenden Anschlag für das Gleitelement (4) ausbildet und zumindest ein Abschnitt des Gleitelements (4) zwischen diesen Anschlägen in seiner Position entlang der Längsachse (X) festgelegt ist.

2. Gleitlager (1) nach Anspruch 1,
**dadurch gekennzeichnet, dass**
das Gleitelement (4) nur nach einem Lösen der Schlittenelemente (2, 3) voneinander und einem Entfernen der Schlittenelemente (2, 3) entlang der Längsachse (X) voneinander ohne eine radiale Komprimierung aus der Durchführung entnehmbar ist.

3. Gleitlager (1) nach Anspruch 2,
**dadurch gekennzeichnet, dass**
die Schlittenelemente (2, 3) und das Gleitelement (4) dergestalt zueinander korrespondierend ausgebildet sind, dass bei einer Anordnung eines solchen zylindrischen Führungsabschnitts der Schiene in der Gleitöffnung (10), der einen solchen Durchmesser aufweist, dass er an zwei radial gegenüberliegenden Enden jeweils an dem Gleitelement (4) anliegt, nach dem Lösen der Schlittenelemente (2, 3) voneinander die Schlittenelemente (2, 3) jeweils durch den von ihnen ausgebildeten Längsabschnitt der Durchführung an dem Führungsabschnitt der Schiene geführt entlang der Längsachse (X) voneinander entfernbar sind, während das Gleitelement (4) an einem der beiden Schlittenelemente (2, 3) angeordnet verbleibt, bis das andere der Schlittenelemente (2, 3) entlang der Längsachse (X) von dem Gleitelement (4) beabstandet ist, und anschließend das Gleitelement (4) entlang der Längsachse (X) aus dem einen Schlittenelement (2, 3) entfernbar ist.

4. Gleitlager (1) nach einem der Ansprüche,
**dadurch gekennzeichnet, dass**
die Schlittenelemente (2, 3) jeweils in dem von ihnen ausgebildeten Längsabschnitt der Durchführung die Längsachse (X) in einem Winkelbereich von mindestens 200°, insbesondere mindestens 240° umschließen, wobei insbesondere das Gleitelement (4) in jedem der von den beiden Schlittenelementen (2, 3) ausgebildeten Längsabschnitte der Durchführung die Längsachse (X) in einem Winkelbereich von mindestens 200°, insbesondere mindestens 240° umschließt.

5. Gleitlager (1) nach einem der vorangehenden Ansprüche, **dadurch gekennzeichnet, dass**
das Gleitelement (4) ein Mantelteil (40) aufweist, das nach Art eines, insbesondere durch einen entlang der Längsachse (X) durchlaufenden Schlitz unterbrochenen, Hohlzylinders ausgebildet ist und das mit seiner radialen Innenseite die Gleitöffnung (10) ausbildet, wobei insbesondere an einer radialen Außenseite des Mantelteils (40) eine um die Längsachse (X) umlaufende Vorsprungsanordnung (41) ausgebildet ist, die zumindest teilweise entlang der Längsachse (X) zwischen den von den beiden Schlittenelementen (2, 3) ausgebildeten Anschlägen (21, 31) angeordnet ist.

6. Gleitlager (1) nach einem der vorangehenden Ansprüche, **dadurch gekennzeichnet, dass**
die Vorsprungsanordnung (41) mehrere um die Längsachse (X) verteilt angeordnete Vorsprungsabschnitte aufweist, von denen zumindest einer als Verdrehsicherungsabschnitt (410) ausgebildet ist und zwischen zwei senkrecht zur Längsrichtung wirkenden, in einer Drehrichtung um die Längsachse (X) voneinander beabstandeten weiteren Anschlägen (21, 31) des Schlittens (100) angeordnet ist, von denen insbesondere jeweils einer von jeweils einem der Schlittenelemente (2, 3) ausgebildet ist, zum Festlegen einer Drehposition des Gleitelements (4) zum Schlitten (100) bezogen auf eine Drehung um die Längsachse (X).

7. Gleitlager (1) nach einem der Ansprüche 5 oder 6, **dadurch gekennzeichnet, dass**
das Gleitelement (4) an der Innenseite seines Mantelteils (40) entlang der Längsachse (X) verlaufende Rinnen aufweist.

8. Gleitlager (1) nach einem der Ansprüche 5 bis 7,
**dadurch gekennzeichnet, dass**
die Schlittenelemente (2, 3) an ihren entlang der Längsachse (X) zueinander weisenden Enden gemeinsam eine um die Längsachse (X) umlaufende, die Anschläge (21, 31) der beiden Schlittenelemente (2, 3) ausbildende Nut ausbilden, wobei die Vorsprungsanordnung (41) zumindest teilweise in der Nut angeordnet ist.

9. Gleitlager (1) nach einem der Ansprüche 6 bis 8,
**dadurch gekennzeichnet, dass**
der Schlitten (100) eine Aussparung aufweist, die in die Durchführung mündet, wobei der Verdrehsicherungsabschnitt (410) des Gleitelements (4) in der Aussparung angeordnet ist, wobei insbesondere die Aussparung in die Nut mündet und/oder die Aussparung eine durchgehende Verbindung von einer Außenseite des Schlittens (100) zu der Durchführung ausbildet.

10. Gleitlager (1) nach einem der vorangehenden Ansprüche, **dadurch gekennzeichnet, dass**
die Schlittenelemente (2, 3) einstückig ausgebildet sind, insbesondere aus einem Metall oder einer Metalllegierung einstückig hergestellt sind, insbesondere mittels Druckguss.

11. Gleitlager (1) nach einem der vorangehenden Ansprüche, **dadurch gekennzeichnet, dass**
das Gleitelement (4) aus einem Tribopolymer hergestellt ist, insbesondere einstückig hergestellt ist.

12. Gleitlager (1) nach einem der vorangehenden Ansprüche, **dadurch gekennzeichnet, dass**
zumindest ein Stift (22), der sich entlang der Längsachse (X) erstreckt, an einer zum anderen der Schlittenelemente (2, 3) weisenden Seite des einen der Schlittenelemente (2, 3) fixiert ist, wobei der Stift (22) in einer lochartigen, insbesondere sacklochartigen, Vertiefung (32), die an der zum einen Schlittenelement (2, 3) weisenden Seite des anderen Schlittenelements (2, 3) vorgesehen ist, eingreift zum Festlegen einer Drehposition der Schlittenelemente (2, 3) zueinander bezogen auf eine Drehung um die Längsachse (X).

13. Gleitlager (1) nach einem der vorangehenden Ansprüche, **dadurch gekennzeichnet, dass**
das Gleitlager (1) eine sich entlang der Längsachse (X) erstreckende Schraube (5) aufweist, die mit ihrem Schraubkopf entlang der Längsachse (X) gegen eine Außenseite von einem der Schlittenelemente (2, 3) presst und die sich mit ihrem Gewindebolzen durch dieses eine Schlittenelement (2, 3) hindurch erstreckt und in ein Gewindeloch, das in dem anderen der Schlittenelemente (2, 3) vorgesehen ist, geschraubt ist.

14. Gleitlager (1) nach einem der vorangehenden Ansprüche, **dadurch gekennzeichnet, dass**
der Schlitten (100) eine Befestigungseinrichtung zum Befestigen einer Arbeitsvorrichtung an dem Schlitten (100) umfasst, wobei die Befestigungseinrichtung eine in einer Ebene liegende Auflagefläche für die Arbeitsvorrichtung aufweist, die zwei Teilflächen aufweist, wobei jedes der Schlittenelemente (2, 3) jeweils eine der Teilflächen ausbildet, und/oder wobei der Schlitten (100) zumindest einen senkrecht zur Längsachse (X) verlaufende Kanal (24, 34), insbesondere zumindest zwei senkrecht zur Längsachse (X) verlaufende Kanäle (24, 34), aufweist zur Aufnahme eines Befestigungsmittels zur Befestigung der Arbeitsvorrichtung an dem Schlitten (100), wobei insbesondere die Kanäle (24, 34) parallel zueinander verlaufen und von jedem der Schlittenelemente (2, 3) jeweils zumindest einer der Kanäle (24, 34) ausgebildet ist und insbesondere durch jede der Teilflächen jeweils zumindest einer der Kanäle (24, 34) hindurchtritt.

15. Gleitlageranordnung umfassend ein Gleitlager (1) nach einem der vorangehenden Ansprüche sowie eine Schiene, wobei die Schiene mit ihrem Führungsabschnitt in der Gleitöffnung (10) angeordnet ist und an dem Gleitelement (4) anliegt, wobei insbesondere der Führungsabschnitt entlang der Längsachse (X) um ein Vielfaches länger ist als der Schlitten (100).

16. Verwendung einer Gleitlageranordnung nach Anspruch 15, **dadurch gekennzeichnet, dass**
zum Austausch des Gleitelements (4) die Schlittenelemente (2, 3) voneinander gelöst werden und entlang der Längsachse (X) voneinander entfernt werden, während sie beide ununterbrochen an dem Führungsabschnitt der Schiene geführt sind und der von dem jeweiligen Schlittenelement (2, 3) ausgebildete Längsabschnitt der Durchführung diesen Führungsabschnitt umgreift, wobei das Gleitelement (4) entlang der Längsachse (X) zwischen den voneinander entfernten und an dem Führungsabschnitt der Schiene geführten Schlittenelementen (2, 3) vollständig aus der Durchführung des Schlittens (100) entnommen wird und durch ein neues Gleitelement (4) ersetzt wird, indem das neue Gleitelement (4) nach dem Entnehmen des Gleitelements (4) zwischen den Schlittenelementen (2, 3) entlang der Längsachse (X) in die Durchführung des Schlittens (100) eingeführt wird, wonach die Schlittenelemente (2, 3) miteinander verbunden und aneinander fixiert werden unter Festlegung der Position des neuen Gleitelements (4) relativ zum Schlitten (100).

## Claims

1. Sliding bearing (1), comprising a carriage (100) having a carriage body with a passage that extends along a longitudinal axis (X), wherein in said passage, a sliding element (4) is arranged in a manner bearing against the carriage body, which sliding element surrounds a sliding opening (10) within the passage at least in sections, the sliding opening (10) being configured to receive a cylindrical guide section of a rail elongate along the longitudinal axis (X),
**characterized in that**
the carriage body comprises two carriage elements (2, 3) juxtaposed along the longitudinal axis (X) and releasably fixed to one another, each of which forming a longitudinal section of the passage, wherein each of the carriage elements (2, 3) forms a stop for the sliding element (4) operative along the longitudinal axis and wherein at least one section of the sliding element (4) is fixed in its position along the longitudinal axis (X) between these stops.

2. Sliding bearing (1) according to claim 1,
**characterized in that**
the sliding element (4) can be removed from the passage without radial compression only after releasing the carriage elements (2, 3) from one another and spacing the carriage elements (2, 3) from one another along the longitudinal axis (X).

3. Sliding bearing (1) according to claim 2,
**characterized in that**
the carriage elements (2, 3) and the sliding element (4) are designed to correspond to one another in such a way that, when such a cylindrical guide portion of the rail is arranged in the sliding opening (10), which has such a diameter that it bears against the sliding element (4) at two radially opposite ends in each case, after the carriage elements (2, 3) have been released from one another, the carriage elements (2, 3) can each be spaced from one another along the longitudinal axis (X), guided by the longitudinal section of the passage formed by them on the guide portion of the rail, while the sliding element (4) remains arranged on one of the two carriage elements (2, 3) until the other of the carriage elements (2, 3) is spaced apart from the sliding element (4) along the longitudinal axis (X), and then the sliding element (4) can be removed from the one carriage element (2, 3) along the longitudinal axis (X).

4. Sliding bearing (1) according to any one of the claims, **characterized in that**
the carriage elements (2, 3) respectively surround the longitudinal axis (X) in the longitudinal section of the passage formed by them in an angular range of at least 200°, in particular at least 240°, wherein in particular the sliding element (4) in each of the longitudinal sections of the passage formed by the two carriage elements (2, 3) surrounds the longitudinal axis (X) in an angular range of at least 200°, in particular at least 240°.

5. Sliding bearing (1) according to any one of the preceding claims,
**characterized in that**
the sliding element (4) has a jacket part (40) which is designed in the manner of a hollow cylinder, in particular interrupted by a slot running along the longitudinal axis (X), and which forms the sliding opening (10) with its radial inner side, wherein a projection arrangement (41) is formed in particular on a radial outer side of the jacket part (40), which projection arrangement (41) revolves around the longitudinal axis (X) and is arranged at least partially along the longitudinal axis (X) between the stops (21, 31) formed by the two sliding elements (2, 3).

6. Sliding bearing (1) according to any one of the preceding claims,
**characterized in that**
the projection arrangement (41) has a plurality of projection sections distributed around the longitudinal axis (X), of which at least one is designed as an anti-rotation section (410) and is arranged between two further stops (21, 31) of the carriage (100) acting perpendicularly to the longitudinal direction, of which in particular one is formed by each of the carriage elements (2, 3), for fixing a rotational position of the sliding element (4) relative to the carriage (100) with respect to a rotation about the longitudinal axis (X).

7. Sliding bearing (1) according to any one of claims 5 or 6, **characterized in that**
the sliding element (4) has grooves running along the longitudinal axis (X) on the inside of its jacket part (40).

8. Sliding bearing (1) according to any one of claims 5 to 7, **characterized in that**
the sliding elements (2, 3) at their ends facing one another along the longitudinal axis (X) jointly form a groove running around the longitudinal axis (X) and forming the stops (21, 31) of the two sliding elements (2, 3), wherein the projection arrangement (41) is arranged at least partially in the groove.

9. Sliding bearing (1) according to any one of claims 6 to 8, **characterized in that**
the carriage (100) has a recess which opens into the passage, wherein the anti-rotation section (410) of the sliding element (4) is arranged in the recess, wherein in particular the recess forms a continuous connection from an outer side of the slide (100) to the passage.

10. Sliding bearing (1) according to any one of the preceding claims,
**characterized in that**
the carriage elements (2, 3) are formed in one piece, in particular are manufactured in one piece from a metal or a metal alloy, in particular by means of die casting.

11. Sliding bearing (1) according to any one of the preceding claims,
**characterized in that**
the sliding element (4) is manufactured from a tribopolymer, in particular is manufactured in one piece.

12. Sliding bearing (1) according to any one of the preceding claims,
**characterized in that**
at least one pin (22), which extends along the longitudinal axis (X), is fixed on a side of one of the carriage elements (2, 3) facing the other of the carriage elements (2, 3), the pin (22) engaging in a hole-like, in particular blind-hole-like recess (32) which is provided on the side of the other carriage element (2, 3) facing one carriage element (2, 3), for fixing a rotational position of the carriage elements (2, 3) relative to one another with respect to a rotation about the longitudinal axis (X).

13. Sliding bearing (1) according to any one of the preceding claims,
**characterized in that**
the sliding bearing (1) has a screw (5) extending along the longitudinal axis (X), which presses with its screw head along the longitudinal axis (X) against an outer side of one of the carriage elements (2, 3) and which extends with its threaded bolt through this one carriage element (2, 3) and is screwed into a threaded hole provided in the other of the carriage elements (2, 3).

14. Sliding bearing (1) according to any one of the preceding claims,
**characterized in that**
the carriage (100) comprises a fastening device for fastening the working device to the carriage (100), wherein the fastening device has a support surface for the working device which lies in a plane and has two partial surfaces, wherein each of the carriage elements (2, 3) forms in each case one of the partial surfaces, and/or wherein the carriage (100) has at least one channel (24, 34) extending perpendicularly to the longitudinal axis (X), in particular at least two channels (24, 34) extending perpendicularly to the longitudinal axis (X), for receiving a fastening means for fastening the working device to the carriage (100), in particular the channels (24, 34) extending parallel to one another and at least one of the channels (24, 34) being formed by each of the carriage elements (2, 3) and in particular at least one of the channels (24, 34) passing through each of the partial surfaces.

15. Sliding bearing arrangement comprising a sliding bearing (1) according to any one of the preceding claims and a rail, wherein the rail is arranged with its guide section in the sliding opening (10) and bears against the sliding element (4), wherein in particular the guide section along the longitudinal axis (X) is many times longer than the slide (100).

16. Use of a sliding bearing arrangement according to claim 15, **characterized in that**
for replacing the sliding element (4), the carriage elements (2, 3) are released from one another and spaced from one another along the longitudinal axis (X) while they are both guided uninterruptedly on the guide section of the rail and the longitudinal section of the passage formed by the respective carriage element (2, 3) surrounds this guide section, the sliding element (4) being completely removed from the passage of the carriage (100) along the longitudinal axis (X) between the carriage elements (2, 3) spaced from one another and guided on the guide section of the rail and being replaced by a new sliding element (4) by completely removing the sliding element (4) from the passage of the carriage (100) and replacing it by a new sliding element (4) by inserting the new sliding element (4) into the passage of the carriage (100) along the longitudinal axis (X) after the sliding element (4) has been removed between the carriage elements (2, 3), whereupon the carriage elements (2, 3) are connected to one another and fixed to one another, fixing the position of the new sliding element (4) relative to the carriage (100).

## Revendications

1. Palier lisse (1), comprenant un chariot (100) ayant un corps de chariot avec un passage qui s'étend le long d'un axe longitudinal (X), dans lequel dans ledit passage, un élément coulissant (4) est disposé de manière à s'appuyer contre le corps de chariot, cet élément coulissant entourant une ouverture coulissante (10) à l'intérieur du passage au moins en sections, l'ouverture coulissante (10) étant configurée pour recevoir une section de guidage cylindrique d'un rail s'étendant le long de l'axe longitudinal (X),
**caractérisé en ce que**
le corps de chariot comprend deux éléments de chariot (2, 3) juxtaposés le long de l'axe longitudinal (X) et fixés de manière amovible l'un à l'autre, chacun d'eux formant une section longitudinale du passage, dans lequel chacun des éléments de chariot (2, 3) forme une butée pour l'élément coulissant (4) fonctionnant le long de l'axe longitudinal et dans lequel au moins une section de l'élément coulissant (4) est fixée dans sa position le long de l'axe longitudinal (X) entre ces butées.

2. Palier lisse (1) selon la revendication 1,
**caractérisé en ce que**
l'élément coulissant (4) ne peut être retiré du passage sans compression radiale qu'après avoir libéré les éléments de chariot (2, 3) l'un de l'autre et espacé les éléments de chariot (2, 3) l'un de l'autre le long de l'axe longitudinal (X).

3. Palier lisse (1) selon la revendication 2,
**caractérisé en ce que**
les éléments de chariot (2, 3) et l'élément coulissant (4) sont conçus pour correspondre l'un à l'autre de telle sorte que, lorsqu'une partie de guidage cylindrique du rail est disposée dans l'ouverture de glissement (10), qui a un diamètre tel qu'elle s'appuie contre l'élément coulissant (4) à deux extrémités radialement opposées dans chaque cas, après que les éléments de chariot (2, 3) ont été libérés l'un de l'autre, les éléments de chariot (2, 3) peuvent chacun être espacés l'un de l'autre le long de l'axe longitudinal (X), guidés par la section longitudinale du passage formée par eux sur la partie de guidage du rail, tandis que l'élément coulissant (4) reste disposé sur l'un des deux éléments de chariot (2, 3) jusqu'à ce que l'autre élément de chariot (2, 3) soit écarté de l'élément coulissant (4) le long de l'axe longitudinal (X), puis l'élément coulissant (4) peut être retiré de l'élément de chariot (2, 3) le long de l'axe longitudinal (X).

4. Palier lisse (1) selon l'une quelconque des revendications,
**caractérisé en ce que**
les éléments de chariot (2, 3) entourent respectivement l'axe longitudinal (X) dans la section longitudinale du passage qu'ils forment dans une plage angulaire d'au moins 200°, en particulier d'au moins 240°, où en particulier l'élément coulissant (4) dans chacune des sections longitudinales du passage formé par les deux éléments de chariot (2, 3) entoure l'axe longitudinal (X) dans une plage angulaire d'au moins 200°, en particulier d'au moins 240°.

5. Palier lisse (1) selon l'une quelconque des revendications précédentes,
**caractérisé en ce que**
l'élément coulissant (4) comporte une partie enveloppe (40) conçue à la manière d'un cylindre creux, notamment interrompue par une fente s'étendant le long de l'axe longitudinal (X), et qui forme l'ouverture coulissante (10) avec son côté intérieur radial, dans laquelle un dispositif de projection (41) est formé notamment sur un côté extérieur radial de la partie enveloppe (40), lequel dispositif de projection (41) tourne autour de l'axe longitudinal (X) et est disposé au moins partiellement le long de l'axe longitudinal (X) entre les butées (21, 31) formées par les deux éléments coulissants (2, 3).

6. Palier lisse (1) selon l'une quelconque des revendications précédentes,
**caractérisé en ce que**
le dispositif de projection (41) comporte plusieurs sections de projection réparties autour de l'axe longitudinal (X), dont au moins une est conçue comme section anti-rotation (410) et est disposée entre deux autres butées (21, 31) du chariot (100) agissant perpendiculairement à la direction longitudinale, dont notamment une est formée par chacun des éléments de chariot (2, 3), pour fixer une position de rotation de l'élément coulissant (4) par rapport au chariot (100) par rapport à une rotation autour de l'axe longitudinal (X).

7. Palier lisse (1) selon l'une quelconque des revendications 5 ou 6,
**caractérisé en ce que**
l'élément coulissant (4) présente des rainures le long de l'axe longitudinal (X) à l'intérieur de sa partie enveloppe (40).

8. Palier lisse (1) selon l'une quelconque des revendications 5 à 7,
**caractérisé en ce que**
les éléments de chariot (2, 3) à leurs extrémités se faisant face le long de l'axe longitudinal (X) forment conjointement une rainure s'étendant autour de l'axe longitudinal (X) et formant les butées (21, 31) des deux éléments de chariot (2, 3), le dispositif de projection (41) étant disposé au moins partiellement dans la rainure.

9. Palier lisse (1) selon l'une quelconque des revendications 6 à 8,
**caractérisé en ce que**
le chariot (100) a un renfoncement qui débouche dans le passage, dans lequel la section anti-rotation (410) de l'élément coulissant (4) est disposée dans le renfoncement, dans lequel en particulier le renfoncement forme une connexion continue d'un côté extérieur du chariot (100) au passage.

10. Palier lisse (1) selon l'une quelconque des revendications précédentes,
**caractérisé en ce que**
les éléments de chariot (2, 3) sont formés d'une seule pièce, en particulier sont fabriqués d'une seule pièce à partir d'un métal ou d'un alliage de métaux, en particulier au moyen d'un moulage sous pression.

11. Palier lisse (1) selon l'une quelconque des revendications précédentes,
**caractérisé en ce que**
l'élément coulissant (4) est fabriqué en tribopolymère, en particulier est fabriqué en une seule pièce.

12. Palier lisse (1) selon l'une quelconque des revendications précédentes,
**caractérisé en ce que**
au moins une goupille (22), qui s'étend le long de l'axe longitudinal (X), est fixée sur un côté de l'un des éléments de chariot (2, 3) faisant face à l'autre des éléments de chariot (2, 3), la goupille (22) s'engageant dans une cavité (32) en forme de trou, en particulier de trou borgne, qui est prévue sur le côté de l'autre élément de chariot (2, 3) faisant face à un élément de chariot (2, 3), pour fixer une position de rotation des éléments de chariot (2, 3) l'un par rapport à l'autre par rapport à une rotation autour de l'axe longitudinal (X).

13. Palier lisse (1) selon l'une quelconque des revendications précédentes,
**caractérisé en ce que**
le palier lisse (1) comporte une vis (5) s'étendant le long de l'axe longitudinal (X), qui appuie avec sa tête de vis le long de l'axe longitudinal (X) contre un côté extérieur de l'un des éléments de chariot (2, 3) et qui s'étend avec son boulon fileté à travers cet élément de chariot (2, 3) et est vissée dans un trou fileté prévu dans l'autre des éléments du chariot (2, 3).

14. Palier lisse (1) selon l'une quelconque des revendications précédentes,
**caractérisé en ce que**
le chariot (100) comprend un dispositif de fixation pour fixer le dispositif de travail au chariot (100), dans lequel le dispositif de fixation a une surface de support pour le dispositif de travail qui se trouve dans un plan et a deux surfaces partielles, dans lequel chacun des éléments de chariot (2, 3) forme dans chaque cas une des surfaces partielles, et/ou dans lequel le chariot (100) a au moins un canal (24, 34) s'étendant perpendiculairement à l'axe longitudinal (X), en particulier au moins deux canaux (24, 34) s'étendant perpendiculairement à l'axe longitudinal (X), pour recevoir un moyen de fixation pour fixer le dispositif de travail au chariot (100), en particulier les canaux (24, 34) s'étendant parallèlement les uns aux autres et au moins un des canaux (24, 34) étant formé par chacun des éléments du chariot (2, 3) et en particulier au moins un des canaux (24, 34) traversant chacune des surfaces partielles.

15. Dispositif de palier lisse comprenant un palier lisse (1) selon l'une quelconque des revendications précédentes et un rail, dans lequel le rail est disposé avec sa section de guidage dans l'ouverture de glissement (10) et s'appuie contre l'élément de glissement (4), dans lequel en particulier la section de guidage le long de l'axe longitudinal (X) est plusieurs fois plus longue que le chariot (100).

16. Utilisation d'un palier lisse selon la revendication 15, **caractérisé en ce que**
pour remplacer l'élément coulissant (4), les éléments de chariot (2, 3) sont libérés l'un de l'autre et espacés l'un de l'autre le long de l'axe longitudinal (X) alors qu'ils sont tous deux guidés sans interruption sur la section de guidage du rail et que la section longitudinale du passage formé par l'élément de chariot respectif (2, 3) entoure cette section de guidage, l'élément coulissant (4) étant complètement retiré du passage du chariot (100) le long de l'axe longitudinal (X), entre les éléments de chariot (2, 3) espacés les uns des autres et guidés sur la section de guidage du rail et remplacé par un nouvel élément coulissant (4) en retirant complètement l'élément coulissant (4) du passage du chariot (100) et en le remplaçant par un nouvel élément coulissant (4) en insérant le nouvel élément coulissant (4) dans le passage du chariot (100) le long de l'axe longitudinal (X) après que l'élément coulissant (4) a été retiré entre les éléments du chariot (2, 3), après quoi les éléments du chariot (2, 3) sont reliés et fixés l'un à l'autre, fixant la position du nouvel élément coulissant (4) par rapport au chariot (100).
